# EUROPEAN PATENT SPECIFICATION

(11) **EP 1 443 765 B1**
(45) Date of publication and mention of the grant of the patent: **15.10.2008**
(21) Application number: 04001225.4
(22) Date of filing: 21.01.2004
(51) Int. Cl.: H04N 7/173

(54) **Media channel setup in a media exchange network**
Media Kanalaufbau über ein Netzwerk für den Mediaaustausch
Etablissement d'un canal médiatique dans un réseau d'échange médiatique

(30) Priority: 30.01.2003 US 444099 P; 30.01.2003 US 443894 P; 25.03.2003 US 457179 P
(43) Date of publication of application: 04.08.2004
(73) Proprietor: Broadcom Corporation, Irvine, CA 92617 (US)
(72) Inventor: Karaoguz, Jeyhan, California 92606 Irvine (US); Bennett, James D., San Clemente, CA 92672 (US)
(74) Representative: Jehle, Volker Armin

(56) References cited:
- WO-A-01/19084
- WO-A-01/46818
- WO-A-02/37943
- WO-A-02/080552
- "Metabyte announces personalized TV software" INTERNET, 21 January 1999 (1999-01-21), XP002154116
- TOKMAKOFF A ET AL: "HOME MEDIA SERVER CONTENT MANAGEMENT" PROCEEDINGS OF THE SPIE, SPIE, BELLINGHAM, VA, US, vol. 4519, 22 August 2001 (2001-08-22), pages 168-179, XP009017768 ISSN: 0277-786X

## Description

### FIELD OF THE INVENTION

Certain embodiments of the invention relate to establishment of communication links between parties. More specifically, certain embodiments of the invention relate to a method and system for media channel setup in a media exchange network.

### BACKGROUND OF THE INVENTION

The creation of a communication link between at least two parties may take many forms. The communication link may be a one-way or unidirectional link from a first party to at least one other party, or a two-way or bidirectional link between two or more parties. For example, a two-way link may include a telephone land-line or cell phone link between a caller or calling party at a first location and a called party at a second location. Another example of a two-way link is a video conference link between a first group of people situated at a first corporation and a second group of people situated at a second corporation conducting a meeting. A two-way radio link between two children with walkie-talkies is another example. Also, a link from a user's PC to a web page on the Internet is considered a two-way link where the user clicks on certain displayed icons requesting information and the web page server sends back the associated information.

A one-way link may include, for example, a commercial television broadcast link from a local television station to a subscriber's or user's television set in their home. Another example of a one-way link is a one-way commercial radio broadcast link from a radio station to a user's radio in their home. Also, an email link may be considered a one-way link where a user of a PC sends an email message over the Internet, for example, to a second party.

The communication links may be wired or wireless and may also be direct or indirect. For example, a wired link may comprise a cable television link between a cable headend and a user's television set. A wireless link may include, for example, a cell phone connection via a cell tower. A direct link may include, for example, a first walkie-talkie communicating via a direct line of sight with a second walkie-talkie. An indirect link may comprise, for example, an Internet communication link from a first PC to a second PC via several servers, routers, bridges and/or hubs.

Further limitations and disadvantages of conventional and traditional approaches will become apparent to one of skill in the art, through comparison of such systems with the present invention as set forth in the remainder of the present application with reference to the drawings.

WO 01/19084 describes a system in which contributors such as individuals in the home may create personal television channel programming. Personal television programs may be distributed to multiple viewers over a communications network such as the Internet. Personal television program schedule information may be stored in a database that is also used to store program schedule information for traditional television channels. Viewers may use a program guide or other interactive television application to view program schedule information, to set reminders, to set favorites, to establish parental controls, and perform other such functions.

According to the invention there are provided a method for supporting communication of media in a media exchange network as defined by independent claim 1, a machine-readable storage as defined by independent claim 4, a system for supporting communication of media as defined by independent claim 5, a system supporting consumption of media by a television display as defined by independent claim 6, and a system for supporting delivery of personal media to a television display as defined by independent claim 7.

Further advantageous features of the invention are defined by the dependent subclaims.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

Fig. 1A is a diagram illustrating an embodiment of a media exchange network supporting set up of a new media channel in accordance with various aspects of the present invention.

Fig. 1B is a diagram illustrating an embodiment of a media exchange network supporting set up of a new media channel in accordance with various aspects of the present invention.

Fig. 1C is a diagram illustrating an embodiment of a media exchange network for setting up a new 3^{rd} party media channel in accordance with various aspects of the present invention.

Fig. 2 is a flowchart illustrating an embodiment of a method 200 that may be utilized to set up a new media channel in the media exchange network of Fig. 1A or Fig. 1B, for example, in accordance with various aspects of the present invention.

Figs. 3 is a schematic block diagram of a first exemplary media exchange network in accordance with an embodiment of the present invention.

Fig. 4 is a schematic block diagram of performing personal media exchange over a second exemplary media exchange network in accordance with an embodiment of the present invention.

Fig. 5 is a schematic block diagram of performing third-party media exchange over a third exemplary media exchange network in accordance with an embodiment of the present invention.

Fig. 6 is an exemplary illustration of a TV guide channel user interface in accordance with an embodiment of the present invention.

Fig. 7 is an exemplary illustration of several instantiations of a TV guide channel user interface of Fig. 4 in accordance with an embodiment of the present invention.

Fig. 8 is an exemplary illustration of a TV guide channel user interface showing several options of a pushed media in accordance with an embodiment of the present invention.

Fig. 9A is a schematic block diagram of a media processing system (MPS) interfacing to media capture peripherals in accordance with an embodiment of the present invention.

Fig. 9B illustrates an alternative embodiment of a media processing system (MPS) in accordance with various aspects of the present invention.

Fig. 10 is a schematic block diagram of a PC and an MPS interfacing to a server on a media exchange network in accordance with an embodiment of the present invention.

Fig. 11 is a schematic block diagram of a PC interfacing to personal media capture devices and remote media storage on a media exchange network in accordance with an embodiment of the present invention.

### DETAILED DESCRIPTION OF THE INVENTION

Certain embodiments of the invention relate to setting up a communication link between at least two parties. In particular, certain embodiments of the present invention relate to setting up personal broadcasting channels between parties on a media exchange network. In this regard, the setting up of a channel may be equivalent to the setting up a communication link in accordance with an embodiment of the invention.

Aspects of the invention may also be found in a method for supporting communication of media. Certain embodiments of the method for supporting communication of media may comprise establishing a private television channel to be showed by a first television at a first home and a second television at a second home. Personal media associated with the private television channel may be displayed along with content of a media broadcast on the first television and/or the second television. The personal media may be communicated over the private television channel between the first television and the second television. The second television may be selected from a list or profile displayed within a user interface on the first television.

An identifier associated with the first television and/or the second television may be determined and the private television channel may be established based one more identifiers. A representation of the private television channel may be presented in a channel guide displayed on the first television and/or the second television. A representation of the associated personal media for the private television channel may be presented in a media guide displayed on the first television and/or the second television.

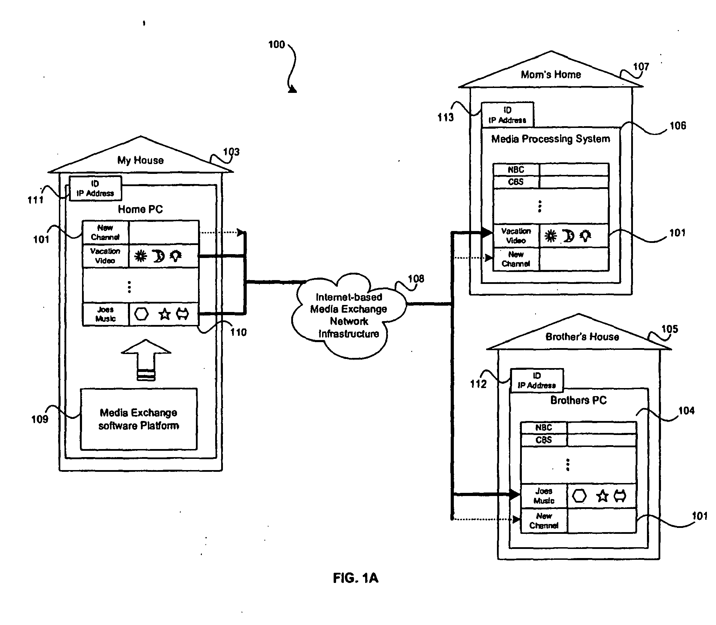

Fig. 1A is a diagram illustrating an embodiment of a media exchange network 100 supporting set up of a new media channel 101 in accordance with various aspects of the present invention. The media exchange network 100 may also be referred to as a system for supporting communication of media 100. The system for communicating media 100 may include a home PC 102 situated at "My House" 103, a brother's PC 104 situated at "Brother's House" 105, and a media processing system (MPS) 106 situated at "Mom's House" 107. More generally, "My House" 103 may be a first location, "Brother's House" 105 may be a second location and "Mom's House" 107 may be a third location. Notwithstanding, the designations of who lives at the first, second and third locations are for illustrative purposes and not critical to practicing the invention. The system for supporting communication of media may further include the Internet-based media exchange network infrastructure 108 that may connect the home PC 102, the brother's PC 104, and the media processing system 106.

The home PC 102 may include a media exchange software (MES) platform 109. The media exchange software platform 109 on the home PC 102 may support set up of new media channels on the system for supporting communication of media 100. For example, the media exchange software platform 109 may provide a format, displayed on a monitor of the home PC 102, known as a television channel guide user interface 110. The television channel guide user interface 110 may allow a user to set up a media channel using a navigation device and/or keyboard. Exemplary navigation devices may include, a mouse, a touch screen display, a remote control and any combination thereof. The media exchange software platform 109 may also provide other functionality for a user of the home PC 102 to set up a new media channel 101.

A media processing system may also comprise a set-top-box (STB), a PC, and/or a television with a media management system (MMS). A media management system may also be referred to as a media exchange software (MES) platform. Notwithstanding, a media management system may include a software platform operating on at least one processor that may provide certain functionality including user interface functionality, distributed storage functionality, networking functionality, and automatic control and monitoring of media peripheral devices. For example, a media management system may provide automatic control of media peripheral devices, automatic status monitoring of media peripheral devices, and inter-home media processing system routing selection. A media processing system may also be referred to as a media-box and/or an M-box. Any personal computer may indirectly access and/or control any media peripheral device in instances where the personal computer may include a media management system. Such access and/or control may be accomplished through various communication pathways via the media processing system or outside of the media processing system. A media processing system may also have the capability to automatically access and control any media peripheral device without user interaction and/or with user intervention. A personal computer (PC) may include media exchange software running on or being executed by the personal computer and may be referred to as a media processing system. The media processing system may also include a speech recognition engine that may be adapted to receive input speech and utilize the input speech control various functions of the media processing system.

Each of the elements or components of the network for communicating media or media exchange network may be identified by a network protocol address or other identifier which may include, but is not limited to, an Internet protocol (IP) address, a media access control (MAC) address and an electronic serial number (ESN). Examples of elements or components that may be identified by such addresses or identifiers may include media processing systems, media management systems, personal computers, media or content providers, media exchange software platforms and media peripherals.

In general, the PC's 102, 104 and the media processing system 106 may each include a media exchange software (MES) platform and a networking component for connectivity. The media exchange software platform may provide multiple capabilities including media "push" capability, media "access" capability, media channel construction/selection, image sequence selection, and text and voice overlay. The media exchange software platform may also provide channel and program naming, inter-home routing selection, authorship and media rights management, shared inter-home media experience, billing service, and an integrated television channel guide look-and-feel.

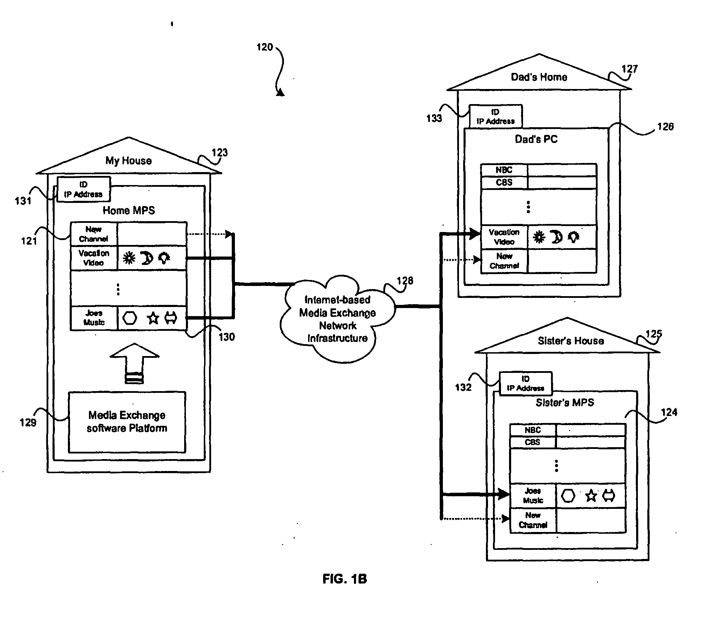

Fig. 1B is a diagram illustrating an embodiment of a media exchange network 120 supporting set up of a new media channel 121 in accordance with various aspects of the present invention. The media exchange network 120 may include a home media processing system 122 at situated at "My House" 123, a sister's MPS 124 situated at "Sister's House" 125, and Dad's PC 126 at "Dad's House" 127. More generally, "My House" 123 may be a first location, "Sister's House" 125 may be a second location and "Dad's House" 127 may be a third location. Notwithstanding, the designations of who lives at the first, second and third locations are for illustrative purposes and not critical to practicing the invention. The media exchange network 120 may further include the Internet-based media exchange network infrastructure 128 that may provide access and transport functionalities for the home media processing system 122, the sister's media processing system 124 and the Dad's PC 126.

The home MPS 122 may also include a media exchange software (MES) platform 129. The media exchange software platform 129 on the home media processing system 122 supports set up of new media channels on the media exchange network 120. For example, the media exchange software platform 129 provides a format, displayed on a television screen of the home media processing system 122, such as a television channel guide user interface 130 to allow a user to set up a media channel using a remote control. The media exchange platform 129 may also provide other functionality for a user of the home media processing system 122 to set up a new media channel 121. Accordingly, the channel guide user interface may be formatted in a graphical user interface (GUI).

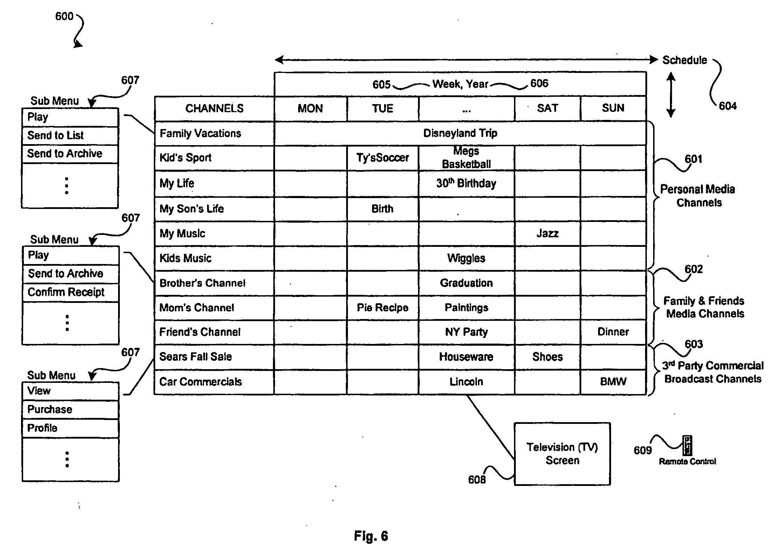

An exemplary television channel guide is illustrated in Fig. 6. Referring to Fig. 6, there is shown a channel guide user interface 600 in accordance with an embodiment of the invention. The television channel guide user interface 600 may be displayed on a television screen 608 and controlled by a remote control device 609 to set up new channels. Also, the television channel guide user interface 600 may be displayed on a PC monitor and controlled by a keyboard or mouse to set up new channels. In accordance with an aspect of the invention, various types of channels may be set up by a user. These may include, but are not limited to, personal media channels 601 that may be set up by a user of a media exchange network and friend's and family's media channels 602 that may also be set up by a user. Furthermore, third party channels 603 may also be set up by third parties either upon request by a user of a media exchange network or based on a profile of a user.

Exemplary personal media channels 601 may include, a "family vacations channel", a "kid's sports channel", a "my life channel", a "son's life channel", a "my music channel", and a "kid's music channel". The friends and family media channels 602 may include, for example, a "brother's channel", a "Mom's channel", and a "friend's channel". The third party media channels 603 may include, for example, a "Sears Fall sale channel" and a "car commercials channel". The type of media that may be stored in a media channel may include, but is not limited to, video, images, audio, text, and any other type of digital media that may be generated by a media peripheral, for example.

In accordance with Fig. 1A and Fig. 1B, the set up of a new media channel 101 or 121 may be accomplished via a PC or a media processing system. Once set up occurs, the new media channel or its associated media may be pushed via the media exchange network to other PC's and/or media processing systems situated through the media exchange network. For example, referring to Fig. 1A, a user at "My House" 103 may set up a new channel 101 on the home PC 102 and push the new channel 101 to the brother's PC 104 and the media processing system 106. Similarly, referring to Fig. 1B, a user at "My House" 123 may set up a new channel 121 on the home MPS 122 and push the new channel 121 to the sister's MPS 124 and the Dad's PC 126.

In accordance with an embodiment of the invention, each of the devices on the system for supporting communication of media 100 may possess a unique device ID and an IP address. In this regard, the home PC 102, the brother's PC 104, and the media processing system 106 may each possess a unique device ID and an IP address. Notwithstanding, the invention is not limited to an IP address. Accordingly, other identifiers such as a medium access control (MAC) address may also be utilized. The identifiers may be utilized to identify and/or make associations corresponding to a particular device.

Whenever a user situated at "My House" 103, for example, first brings home and connects the home PC 102, the user may be provided with an option to register the home PC 102. In the case of a cable network, for example, the registration process may be utilized to set up the home PC 102 for operation with a cable headend server on the internet-based media exchange network infrastructure 108. As a result, the server may detect the device ID and/or MAC address of the home PC 102 and assign an IP address to home PC 102. In Fig. 1A, an exemplary device ID and IP address for the home PC situated at the first location or "My House" is referenced as 111. Similarly, the brother's PC 104 and media processing system 106 each have a corresponding unique device ID and IP address, 112 and 113, respectively.

Accordingly, whenever a user selects the associated parties for the new channel 101, the device ID's and corresponding IP addresses may be utilized to form a logical link between the new channel 101, the home PC 102, the brother's PC 104, and the Mom's MPS 106, in accordance with an embodiment of the invention. In this regard, the new channel 101, when pushed onto the system for supporting communication of media 100, may appear on the television channel guide user interface of each of the associated parties 104 and 106.

A server such as a cable headend server may be configured to keep track of at least some of the IP addresses and/or MAC addresses of the devices which may be coupled to or otherwise connected to the media exchange network. The server may be a centralized Internet server, a peer-to-peer server, or cable headend server. The server may be distributed over various hosts or remote PC's situated throughout the media exchange network. For example, a first media processing system on the media exchange network may have a communication stack with an IP address, MAC address and/or a device ID and may communicate with a second media processing system on the network. In this regard, traffic may be communicated between media processing systems, between media processing systems and PC's and/or between PCs and PCs, using the Internet Protocol (IP) and point-to-point or point-to-multipoint connectivity.

Similarly, referring to Fig. 1B, a user at the first location or "My House" 123 may initiate the set up of a new channel 121 using a television channel guide user interface 110 on his home media processing system 122. The user may identify and select the sister's media processing system 124 and the Dad's PC 126 as parties to be associated with the new channel 121. Each of the devices on the media exchange network 120 such as home media processing system 122, sister's media processing system 124, and Dad's PC 126, may also possess its own unique device ID and IP and//or MAC address.

In an aspect of the invention, whenever a user or subscriber situated at "My House" 123 first brings home and hooks up their home media processing system 122, the user may be have an option that may permit registration of the home media processing system 122. In the case of a cable network, a cable headend server on the Internet-based media exchange network infrastructure 128 may be configured to facilitate registration of the home media processing system 122. In this regard, the server may detect the device ID or the MAC address of the home media processing system 122 and assign an IP address to the home media processing system 122. In this regard, the device ID, the MAC address and/or the assigned IP address 131 may uniquely identify the media processing system 122. Similarly, the sister's media processing system 124 and Dad's PC 126 may each possess an device ID and IP address, 132 and 133, respectively. In operation, whenever a user selects the associated parties for the new channel 121, the ID's and IP addresses may be utilized to form a logical link between the new channel 121, the home media processing system 122, the sister's media processing system 124, and the Dad's PC 126. Accordingly, the new channel 121, when pushed onto the media exchange network 120, may appear on the television channel guide user interface of each of the selected associated parties 124 and 126.

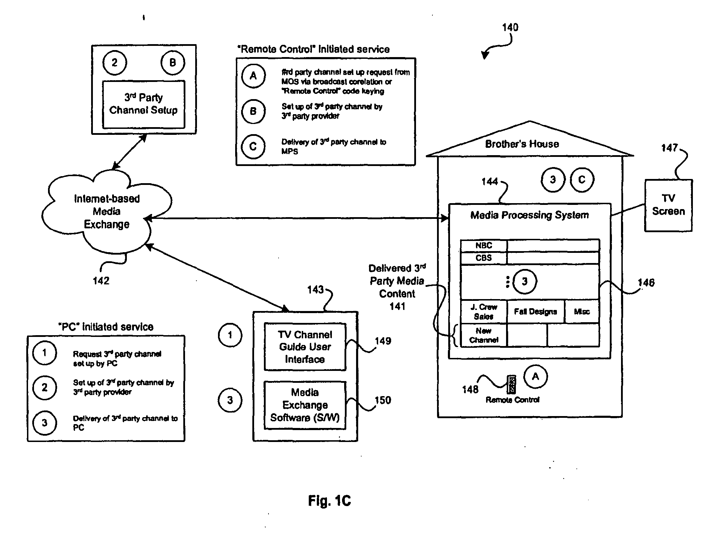

Fig. 1C is a diagram illustrating an embodiment of a media exchange network 140 for setting up a new 3^{rd} party media channel 141 in accordance with various aspects of the present invention. Referring to FIG. 1C, there is shown a PC 143, a media processing system 144, a television screen 147 and a third (3^{rd}) party provider 145. The media exchange network 140 may also include an Internet-based media exchange network infrastructure 142 that may provide a transport medium for facilitating communication between any one or more of the PC 143, the media processing system 144 and the third (3^{rd}) party provider 145. The television screen 147 may be coupled to the media processing system 144. A remote control 148 may be utilized to control the operations of the media processing system, via for example, the television screen 147. For example, a graphical user interface may be displayed on the television screen 147 and remote control may be utilized to navigate the television screen.

In an illustrative embodiment of the invention for setting up a new third (3^{rd}) party channel 141, in step "A", a request to set up the new third (3^{rd}) party channel may be initiated by the media processing system 144 and communicated over the media exchange network 140 via the Internet-based media exchange network infrastructure 142. In this regard, the request may be communicated to the third (3^{rd}) party provider 145 via the Internet-based media exchange network infrastructure 142. The request may be responsive to a third (3^{rd}) party commercial viewed by a user of the media processing system 144, for example. In this regard, the user of the media processing system 144 may enter a code advertised or otherwise displayed during the commercial, using the remote control 148 and/or other device such as a keyboard, to initiate the request. The keyboard may be a software keyboard displayed on the televisions screen 147 or a peripheral keyboard externally coupled to the media processing system 144.

In step B, the third (3^{rd}) party provider 145 may set up the new third (3^{rd}) party channel 141 in response to the request. In step C, The third (3^{rd}) party provider 145 may deliver the new third (3^{rd}) party channel 141 to media processing system 144 over the media exchange network 140 via the Internet-based media exchange network infrastructure 142. A user of the media processing system 144 may view the new third (3^{rd}) party channel 141 as it appears on the television channel guide user interface 146 on the television screen 147. The television channel guide user interface 146 and channel set up functionality may be provided by a media exchange software platform integrated within the media processing system 144.

The new third (3^{rd}) party channel 141 may also be setup by utilizing a PC initiated service. Exemplary PC initiated steps are referenced. Referring to Fig. 1c, in step "1", a request to set up the new third (3^{rd}) party channel may be initiated by the PC 143 and sent over the media exchange network 140 via the Internet-based media exchange network infrastructure 142 to the third (3^{rd}) party provider 145. This request may be responsive to a third (3^{rd}) party advertisement viewed by the user of PC 143 on a web site, for example. The user of the PC 143 may click on a button displayed by the web site, using a navigation device such as a mouse, to initiate the request.

In step 2, the third (3^{rd}) party provider 145 may set up the new third (3^{rd}) party channel 141 in response to the request. In step 3, the third (3^{rd}) party provider 145 may deliver the new third (3^{rd}) party channel 141 to PC 143 over the media exchange network 140 via the Internet-based media exchange network infrastructure 142. A user of PC 143 may view the new third (3^{rd}) party channel 141 as it appears in their television channel guide user interface 149 on a monitor coupled to the PC. The television channel guide user interface 149 and channel set up functionality may be provided by the media exchange software (MES) platform 150 within the PC 143. Media channels which may be presented in a channel view such as personal media channels, friends' and family's media channels, and third (3^{rd}) party media channels, may be generically referred to as customized media channels. A personal communication channel may also be a customized media channel or a customized communication channel.

Referring generally to Fig. 1C, the new third (3^{rd}) party channel 141 may contain media and may be pushed to a user from the 3^{rd} party provider 145. Also the new third (3^{rd}) party channel 141 may contain no media and may be pushed to a user from the 3^{rd} party provider 145. In the case where the new channel containing no media is pushed, the third (3^{rd}) party provider 145 may wait and push media to the new third (3^{rd}) party channel as the media becomes available. For example, the new third (3^{rd}) party channel may be a news update channel. In such a case, media containing video clips of the latest news stories may be scheduled to be pushed to a user once a day, for example, at 6:00 pm. In other aspects of the invention, the PC 143 may request a new third (3^{rd}) party channel be set up and pushed to the media processing system 144 and/or the media processing system 144 may request that a new third (3^{rd}) party channel be set up and pushed to PC 143.

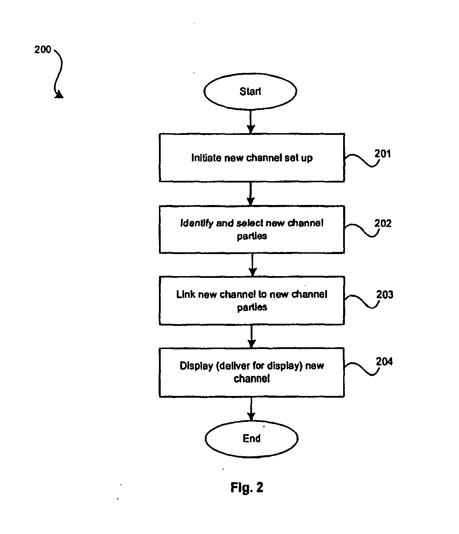

Fig. 2 is a flowchart illustrating an embodiment of a method 200 that may be utilized to set up a new media channel in the media exchange network of Fig. 1A or Fig. 1B, for example, in accordance with various aspects of the present invention. Referring to Fig. 2, in step 201, set up of a new channel is initiated. In step 202, parties to be associated with the new channel may be identified and selected. In step 203, the new channel may be linked to the selected parties. Finally, in step 204, the new channel may be displayed by the user and/or delivered for display to the selected parties.

For example, referring to Fig. 1A, a user at "My House" 103 may initiate the set up of a new channel 101 by utilizing a television channel guide user interface 110 on his home PC 102. The user may identify and select the brother's PC 104 and the Mom's media processing system 106 as parties to be associated with the new channel 101.

A major challenge is to be able to transfer and share many different types of digital media, data, and services between one device/location and another with ease while being able to index, manage, and store the digital media and data.

For example, it is desirable to be able to distribute and store many types of digital media in a PC and/or television environment in a user-friendly manner without requiring many different types of software applications and/or unique and dedicated interfaces. Any networking issues or other technical issues should be transparent to the users. It is also desirable to take advantage of existing hardware infrastructure, as much as possible, when providing such capability.

In an embodiment of the present invention, a media exchange network is provided that enables many types of digital media, data, and/or services to be stored, indexed, viewed, searched for, pushed from one user to another, and requested by users, using a media guide user interface. The media exchange network also allows a user to construct personal media channels that comprise his personal digital media (e.g., captured digital pictures, digital video, digital audio, etc.), request that third-party media channels be constructed from third-party digital media, and access the media channels pushed to him by other users on the media exchange network.

PC's may be used but are not required to interface to the media exchange network for the purpose of exchanging digital media, data, and services. Instead, set-top-boxes or integrated MPS's (media processing systems) may be used with the media exchange network to perform all of the previously described media exchange functions using a remote control with a television screen.

Current set-top-boxes may be software enhanced to create a MPS that provides full media exchange network interfacing and functionality via a TV screen with a TV guide look-and-feel. PC's may be software enhanced as well and provide the same TV guide look-and-feel. Therefore, the media exchange network supports both PC's and MPS's in a similar manner. Alternatively, a fully integrated MPS may be designed from the ground up, having full MPS capability.

In the case of an MPS configuration, the user takes advantage of his remote control and TV screen to use the media exchange network. In the case of a PC configuration, the user takes advantage of his keyboard and/or mouse to use the media exchange network.

An MPS or enhanced PC is effectively a storage and distribution platform for the exchange of personal and third party digital media, data, and services as well as for bringing the conventional television channels to a user's home. An MPS and/or PC connects to the media exchange network via an existing communication infrastructure which may include cable, xDSL, satellite, ISDN and/or other access and transport technologies. The connection to the communication infrastructure may be hard-wired or wireless.

The media exchange network allows users to effectively become their own broadcasters from their own homes by creating their own media channels and pushing those media channels to other authorized users on the media exchange network, such as friends and family members.

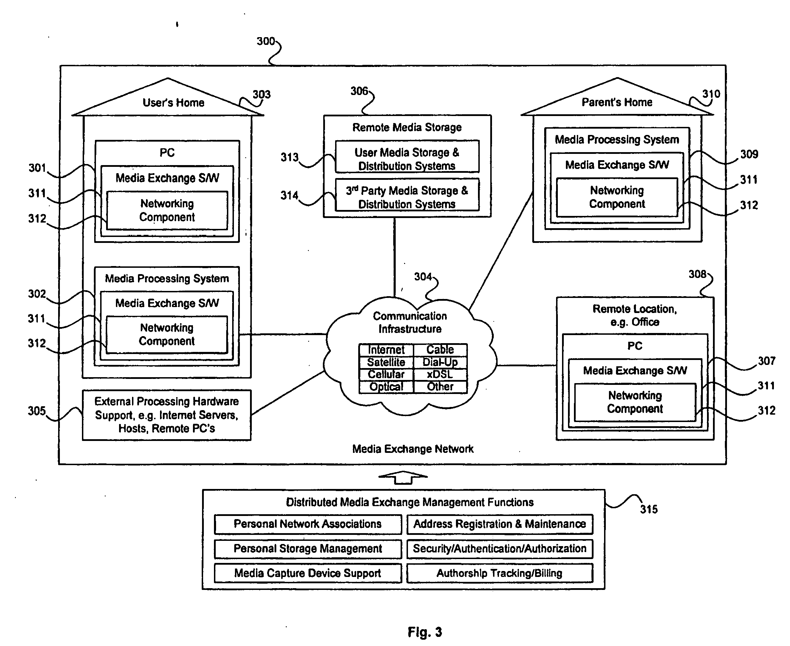

Fig. 3 comprises a media exchange network 300 for exchanging and sharing digital media, data, and services in accordance with an embodiment of the present invention. The media exchange network 300 is a secure, closed network environment that is only accessible to pre-defined users and service providers. The media exchange network of Fig. 3 comprises a first PC 301 and a first media processing system (MPS) 302 at a user's home 303, a communication infrastructure 304, external processing hardware support 305, remote media storage 306, a second PC 307 at a remote location 308 such as an office, and a second MPS 309 at a parent's home 310.

The PC's 301 and 307 and the MPS's 302 and 309 each include a media exchange software (MES) platform 311 and a networking component 312 for connectivity. The MES platform 311 provides multiple capabilities including media "push" capability, media "access" capability, media channel construction/selection, image sequence selection, text and voice overlay, channel and program naming, inter-home routing selection, authorship and media rights management, shared inter-home media experience, billing service, and an integrated media guide interface providing a TV channel guide look-and-feel.

The external processing hardware support 305 comprises at least one server such as a centralized internet server, a peer-to-peer server, or cable headend. The server may alternatively be distributed over various hosts or remote PC's. The MES platform 311 may also reside on the external processing hardware support server 305. The remote media storage 306 may comprise user media storage and distribution systems 313 and/or third party media storage and distribution systems 314.

The communication infrastructure 304 may comprise at least one of internet infrastructure, satellite infrastructure, cable infrastructure, dial-up infrastructure, cellular infrastructure, xDSL infrastructure, optical infrastructure, or some other infrastructure. The communication infrastructure 304 links the user's home 303, parent's home 310, remote media storage 306, and remote location office 308 to each other (i.e., the communication infrastructure 304 links all users and service providers of the media exchange network 300).

The various functions 315 of the media exchange network 300 comprise generating personal network associations, personal storage management, media capture device support, security/authentication/authorization support, authorship tracking and billing and address registration and maintenance. These media exchange management functions 315 may be distributed over various parts of the media exchange network 300. For example, the personal network associations and personal storage management functions may be integrated in the PC 301 at the user's home 303.

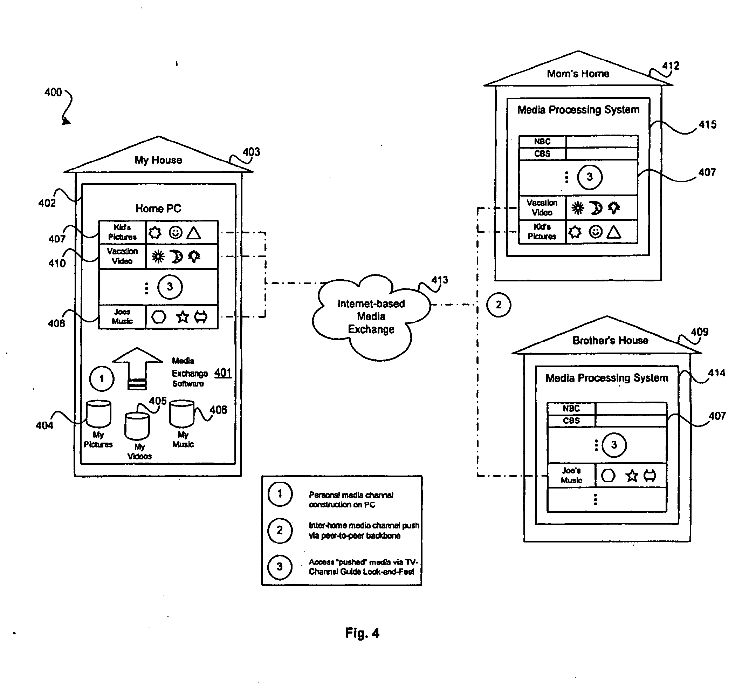

Fig. 4 illustrates an example of personal media exchange over a media exchange network 400 in accordance with an embodiment of the present invention. In step 1, the media exchange software (MES) platform 401 is used to construct personal media channels on a PC 402 by a user at "my house" 403. For example, with various media stored on the PC 402 such as digital pictures 404, videos 405, and music 406, the MES platform 401 allows the digital media to be organized by a user into several channels having a media guide user interface 407 on the PC 402.

In step 2, the user at "my house" 403 pushes a media channel 408 (e.g., "Joe's Music") to "brothers house" 409 and pushes two media channels 410 and 411 (e.g., "Vacation Video" and "Kid's Pictures") to "Mom's house" 412 via a peer-to-peer server 413 over the internet-based media exchange network 400. "Brother's house" 409 includes a first MPS 414 connected to the media exchange network 400. "Mom's house" 412 includes a second MPS 415 connected to the media exchange network 400. The MPS's 414 and 415 also provide a media guide user interface 407.

In step 3, brother and/or Mom access the pushed media channels via their respective media processing systems (MPS's) 414 and 415 using their respective MPS TV screens and remote controls.

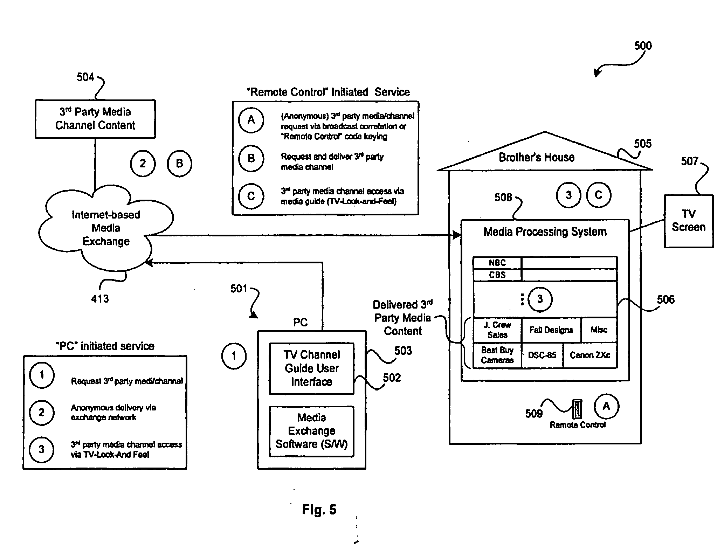

Fig. 5 illustrates an example of third-party media exchange over a media exchange network 500 in accordance with an embodiment of the present invention. In step 1, a PC-initiated third-party request is made by a first party 501 via an internet-based media exchange network 500 using a media guide user interface 502 on a PC 503. In step 2, an anonymous delivery of the requested third-party channel 504 is made to a second party 505 via the internet-based media exchange network 500. In step 3, the second party 505 accesses the third-party channel 504 using a media guide user interface 506 on a TV screen 507 that is integrated into an MPS 508.

Similarly, in step A, an MPS-initiated third-party request is made by a second party 505 via an internet-based media exchange network 500 using a media guide user interface 506 on a TV screen 507 using a remote control 509. The second party 505 may key in a code, using his remote control 509, that is correlated to a commercial or some other third party broadcast media. In step B, an anonymous delivery of the requested third-party channel 504 is made to a first party 501 via the internet-based media exchange network 500. In step C, the first party 501 accesses the third-party channel 504 using a media guide user interface 502 on a PC 503.

Fig. 6 illustrates a media guide user interface 600 in accordance with an embodiment of the present invention. The media guide user interface 600 may be displayed on a TV screen 608 and controlled by a remote control device 609. Also, the media guide user interface 600 may be displayed on a PC monitor and controlled by a keyboard or mouse.

The media guide user interface 600 may be configured not only for conventional TV channels but also for personal media channels 601 that are constructed by a user of a media exchange network, friend's and family's media channels 602 constructed by friends and family, and third party channels 603 that are constructed by third parties either upon request by a user of a media exchange network or based on a profile of a user.

The personal media channels 601 may include, for example, a "family vacations channel", a "kid's sports channel", a "my life channel", a "son's life channel", a "my music channel", and a "kid's music channel". The friends and family media channels 602 may include, for example, a "brother's channel", a "Mom's channel", and a "friend's channel". The third party media channels 603 may include, for example, a "Sears Fall sale channel" and a "car commercials channel".

Each media channel may correspond to a schedule 604 showing, for example, a week 605 and a year 606. For example, under the "kid's sports channel", Ty's soccer game could be scheduled to be viewed on Tuesday of the current week 605 and current year 606. For each media channel, a sub-menu 607 allows for selection of certain control and access functions such as "play", "send to list", "send to archive", "confirm receipt", "view", "purchase", and "profile".

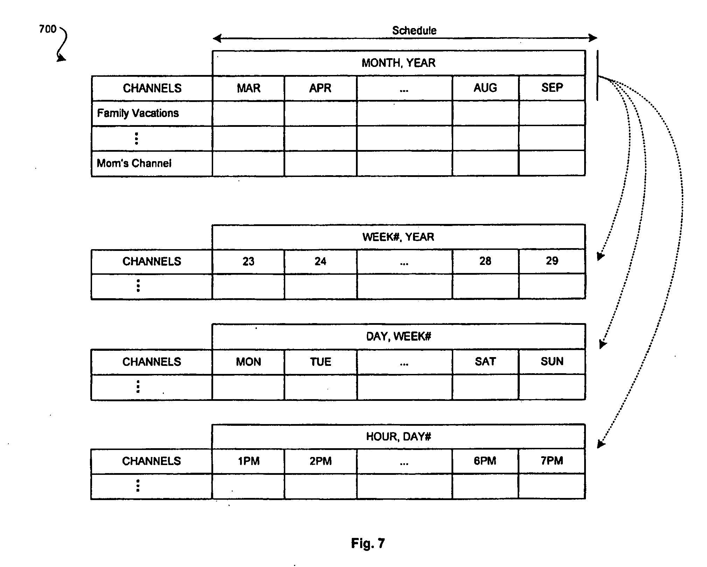

Fig. 7 illustrates possible multiple instantiations of a media guide user interface 700 in accordance with an embodiment of the present invention. The media guide user interface 700 may be viewed with a schedule having formats of, for example, "month, year", "week#, year", "day, week#", or "hour, day".

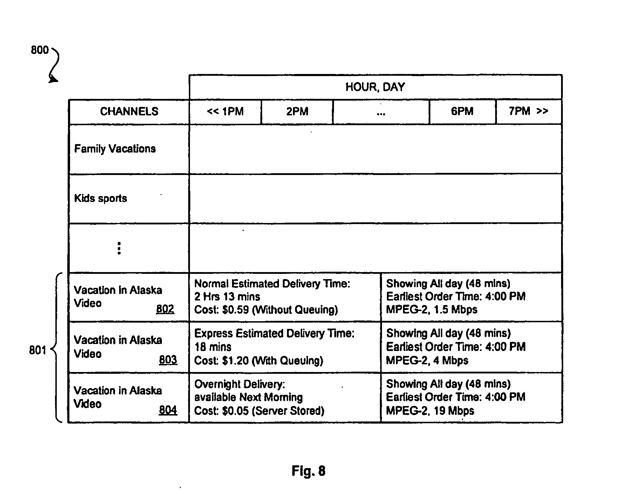

Referring to Fig. 8, a user of a media exchange network may push a media channel (e.g., "Vacation in Alaska Video") to a friend who is on the same media exchange network. The media guide user interface 800 may give the friend several options 801 for how to accept and download the pushed media in accordance with an embodiment of the present invention.

For example, a first, most expensive option 803 may be "Express Delivery" which would deliver the pushed media to the friend in 18 minutes using queuing and cost $1.20, for example. The pushed media may be stored in a file in an MPEG 2 format that was recorded at a rate of 4 Mbps, for example. Queuing comprises buffering and delivering a previous part of the media and then buffering and delivering a next part of the media. For example, a first six minutes of the "Vacation in Alaska Video" may be buffered and delivered first, then a second six minutes may be buffered and delivered next, and so on until the entire media is delivered.

A second, less expensive option 802 may be "Normal Delivery" which would deliver the pushed media in 2 hours and 13 minutes without queuing and cost $0.59, for example. The pushed media may be stored in a file in an MPEG 2 format that was recorded at a rate of 1.5 Mbps, for example.

A third, least expensive option 804 may be "Overnight Delivery" which would deliver the pushed media by the next morning and cost only $0.05, for example. The pushed media may be stored in a file in an MPEG 2 format that was recorded at a rate of 19 Mbps and stored on a server, for example.

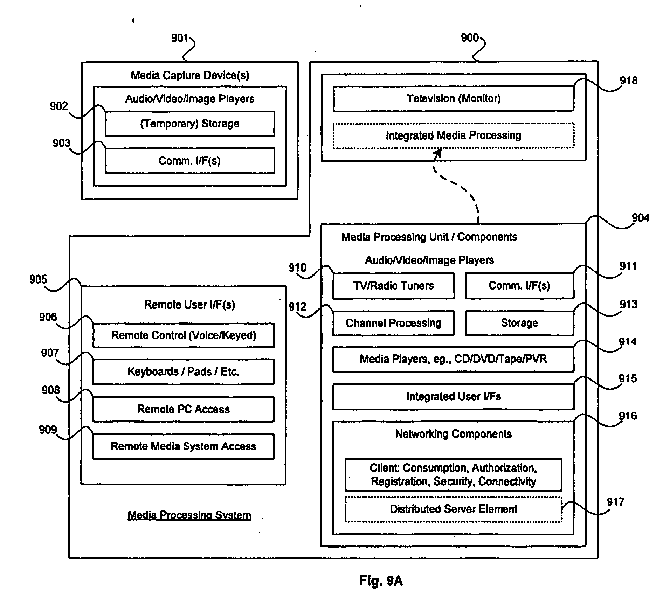

Fig. 9A illustrates the detailed elements of a media processing system (MPS) 900 and media capture devices 901 in accordance with an embodiment of the present invention. The media capture devices 901 may comprise audio, video, and image players, such as digital cameras, digital camcorders, and MP3 players, that each include a temporary storage area 902 and a communication interface 903 such as, for example, a USB interface or a wireless interface. The media capture devices 901 have the capability to interface to an MPS and a PC.

The MPS 900 comprises a media processing unit (MPU) 904, remote user interface(s) 905, and a TV screen 918 to provide integrated media processing capability and indirect user interface capability. The remote user interfaces 905 may comprise a voice or keyed remote control 906, keyboards and pads 907, a remote PC access interface 908, and a remote media system access interface 909 (i.e., providing access from another MPS).

The media processing unit (MPU) 904 comprises TV and radio tuners 910 for image and audio consumption, communications interfaces 911, channel processing 912 (creating, storing, indexing, viewing), storage 913, media players 914 (CD, DVD, Tape, PVR, MP3), an integrated user interface 915 (to provide a TV channel guide look-and-feel), networking components 916 to provide client functions such as consumption (billing), authorization (e.g., using digital certificates and digital ID's), registration, security, and connectivity. In an alternative embodiment of the present invention, the networking components 916 may include a distributed server element 917 that is part of a distributed server.

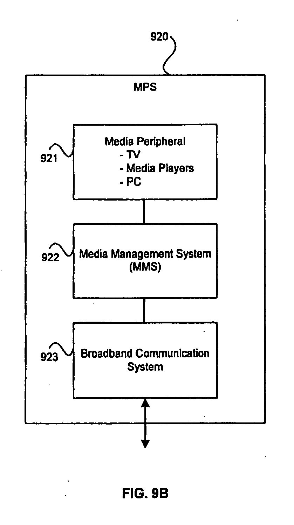

Fig. 9B illustrates an alternative embodiment of a media processing system (MPS) 920 in accordance with various aspects of the present invention. The MPS 920 is essentially an enhanced set-top-box for viewing and interacting with various user interfaces, media, data, and services that are available on the media exchange network using, for example, a remote control. The MPS 920 comprises a media peripheral 921, a MMS (media management system) 922, and a broadband communication interface 923.

The media peripheral 921 may include a TV (television), a PC (personal computer), and media players (e.g., a CD player, a DVD player, a tape player, and a MP3 player) for video, image, and audio consumption of broadcast and/or personal channels. The broadband communication interface 923 may include internal modems (e.g., a cable modem or DSL modem) or other interface devices in order to communicate with, for example, a cable or satellite headend.

The MMS 922 includes a software platform to provide functionality including media "push" capability, media "access" capability, media channel construction/selection, image sequence selection, text and voice overlay, channel and program naming, inter-home routing selection, authorship and media rights management, shared inter-home media experience, billing service, and a media guide user interface providing an integrated TV channel guide look-and-feel.

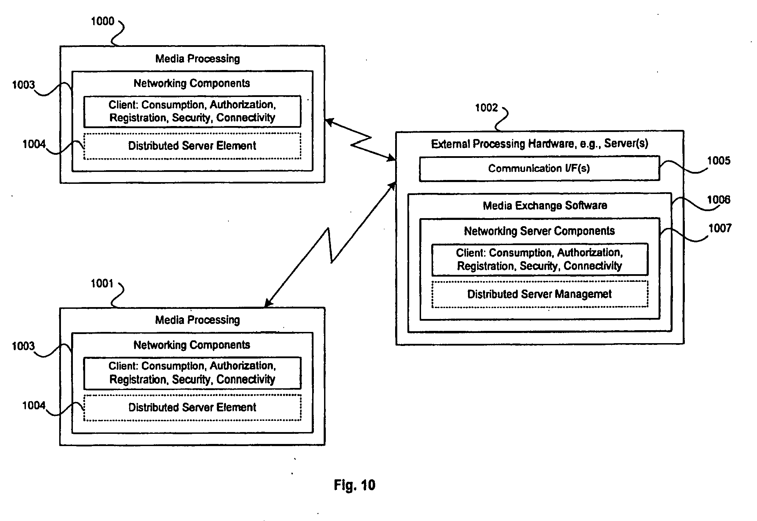

Fig. 10 illustrates connectivity between a PC 1000, an MPS 1001, and external processing hardware 1002 (e.g., a server) in accordance with an embodiment of the present invention. The PC 1000 and MPS 1001 include networking components 1003 to provide client functions such as consumption (billing), authorization, registration, security, and connectivity. Alternatively, the PC 1000 and MPS 1001 may include a distributed server element 1004 that is part of a distributed server.

The PC 1000 and MPS 1001 connect to the external processing hardware 1002 via wired or wireless connections. The external processing hardware 1002 comprises a distributed server or peer-to-peer server. The external processing hardware 1002 also comprises communication interfaces 1005 (e.g., cable interfaces, optical interfaces, etc.) and a media exchange software (MES) platform 1006. The MES platform 1006 in the external processing hardware 1002 allows for communication with the PC 1000 and MPS 1001 which may also use the same MES platform 1006. The external processing hardware 1002 also includes networking server components 1007 to provide the similar client functions such as consumption (billing), authorization, registration, security, and connectivity at the server side.

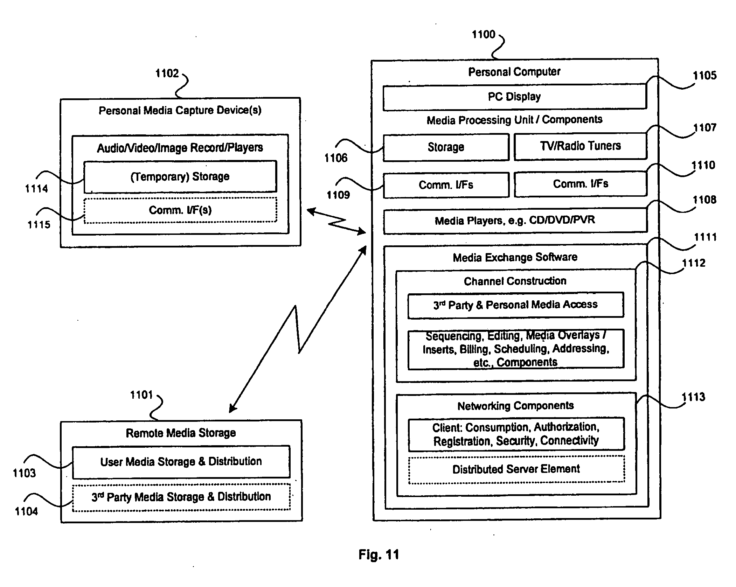

Fig. 11 illustrates connectivity between a PC 1100, remote media storage 1101, and personal media capture devices 1102 when the PC 1100 is used as the primary distributor of digital media such as in the case of PC-to-PC operation, in accordance with an embodiment of the present invention. The personal media capture devices 1102 and remote media storage 1101 connect to the PC 1100 via a wireless or wired connection. The remote media storage 1101 provides user media storage and distribution 1103 as well as third party media storage and distribution 1104. The personal media capture devices 1102 provide temporary storage 1114 and communication interfaces 1115.

Viewing is done using a PC monitor 1105 instead of a television screen. The PC 1100 may include storage 1106, TV/radio tuners 1107 for media consumption, media players 1108, and communication interfaces 1109 and user interfaces 1110 similar to those for the MPS of Fig. 9A. The PC 1100 includes a media exchange software (MES) platform 1111 that provides channel construction capability 1112 and networking capability 1113. The channel construction capability 1112 allows third party and personal media access, sequencing, editing, media overlays and inserts, billing, scheduling, and addressing.

Certain embodiments of the invention may also provide a method and system for establishing communication in a distributed media network by utilizing a media channel setup. The method may include the step of receiving an identification of at least a second party to communicate with via the distributed media network, from a first party. One or more personal communication channels may be established between the first and the second party based on an input from the first party. The input from the first party may be made via a display interface of the first party. The personal communication channel may be presented in a display interface of the second party depending on an input received from the first and/or second party. In any case, the personal communication channel may also be displayed to the second party. The second party may be selected based on an input from the first party and the second party may be selected based on a list and/or a profile. After the personal media channel has been established, media may be transferred and/or displayed on the personal communication channel to one or more parties that may include the second party.

In another embodiment of the invention, the method may also include the step of determining one or more identifier of a device that may be utilized by the second party. Exemplary identifiers may include, but are not limited to, a device ID, a serial number, a medium access control (MAC) address and an Internet protocol (IP) address. The established personal communication channel may be presented and/or updated in a media view and/or a channel view. The personal communication channel may also be updated with newly available media. Notwithstanding, the first party and/or the second party may be a user or a subscriber that utilizes a media processing system, a media peripheral, a personal computer and/or a personal computer executing media exchange software.

Aspects of an exemplary system for establishing communication in a distributed media network utilizing media channel setup may include at least one processor that may receive from a first party, an identification of at least a second party to communicate with via the distributed media network. At least one personal communication channel may be established by the processor. The processor may also be configured to establish one or more communication channels between the first and the second party based on an input made via a display interface of the first party.

The processor may cause the established personal communication channel to be presented in a display interface of the second party based on an input received from the first and/or second party. Accordingly, the processor may also cause the established personal communication channel to be displayed to the second party. The processor may also be adapted to allow the second party to be selected according to an input from the first party and/or the second party to be selected based on a list and/or a profile. Media may be transferred and/or placed on the personal communication channel to the second party and/or other parties.

In accordance with an embodiment of the invention, the processor may also determine at least one identifier of a device that may be utilized by the second party. Exemplary identifiers may include, but are not limited to, a device ID, a serial number, a medium access control (MAC) address and an Internet protocol (IP) address. The processor may also cause the established personal communication channel to be presented and/or updated in a media view and/or a channel view. In this regard, the established personal communication channel may be updated with newly available media by the processor. The first party and/or the second party may be a user or a subscriber that utilizes a media processing system, a media peripheral, a personal computer and/or a personal computer executing media exchange software. Notwithstanding, the processor may be a media processing system processor, a media peripheral processor, a personal computer processor and/or a personal computer executing media exchange software processor.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for supporting communication of media in a media exchange network (100), the method comprising:
setting up one or more new, own personal media channels (101) by the user of a first media device (102) at a first home (103),
selecting a second media device (104) of a second user at a second home (105) from a media channel guide user interface (110) of said first media device (102), both the first media device (102) and the second media device (104) to communicate with being identified by at least one unique identifier respectively;
linking the new, own personal media channel (101) to the selected first and second media devices (102, 104),
a representation of the new personal media channel (101) being displayed in a media channel guide user interface (110,) on the first media device (102) and/or the second media device (104), when the new, own personal channel (101) is pushed onto the media exchange network (108),
associating personal media of the user of the first media device (102) with said own, personal media channel (101),
setting up at least one third party channel (141) that is constructed by a third party provider (145) from third-party digital media either upon request by the user of first media device (143) and/or the user of the second media device (147) or based on a profile of the user making the request, the third party channel (141) being presented in a channel view in response to the request on the first media device (143) and/or second media device (147) by the media channel guide user interface (149, 144), the third party channel (141) being anonymously delivered to the first and/or second media device (143, 147), and
displaying said personal media on said new, own personal media channel (101) along with content of a media broadcast on at least one of said first media device (143) and said second media device (147), communicating at least a portion of said associated personal media over said new, own personal media channel (101) between said first media device (143) and said second media device (147).

2. The method according to claim 1, further comprising
said at least one identifier being at least one of a device ID, a serial number, a medium access control (MAC) address and an Internet protocol (IP) address.

3. The method according to any one of the preceding claims, further comprising said first and second media device (143, 147) being at least one of television, PC, media player, set-top.-box, media-box.

4. A machine-readable storage having stored thereon, a computer program having at least one code section for supporting communication of media, the at least one code section being executable by a machine for causing the machine to perform steps comprising:
setting up one or more new, own personal media channels (101) by the user of a first media device (102) at a first home (103),
selecting a second media device (104) of a second user at a second home (105) from a media channel guide user interface (110) of said first media device (102), both the first media device (102) and the second media device (104) to communicate with being identified by at least one unique identifier respectively;
linking the new, own personal media channel (101) to the selected first and second media devices (102, 104),
a representation of the new personal media channel (101) being displayed in a media channel guide user interface (110,) on the first television (102) and/or the second media device (104), when the new, own personal channel (101) is pushed onto the media exchange network (108),
associating personal media of the user of the first media device (102) with said own, personal media channel (101),
setting up at least one third party channel (141) that is constructed by a third party provider (145) from third-party digital media either upon request by the user of first media device (143) and/or the user of the second media device (147) or based on a profile of the user making the request, the third party channel (141) being presented in a channel view in response to the request on the first media device (143) and/or second media device (147) by the media channel guide user interface (149, 144), the third party channel (141) being anonymously delivered to the first and/or second media device (143, 147), and
displaying said personal media on said new, own personal media channel (101) along with content of a media broadcast on at least one of said first media device (143) and said second media device (147), communicating at least a portion of said associated personal media over said new, own personal media channel (101) between said first media device (143) and said second media device (147).

5. A system for supporting communication of media, the system comprising:
at least one processor for establishing a personal media channel (101) to be showed by a first media device (143) at a first home and a second media device (147) at a second home; and
said at least one processor associates personal media with said personal media channel (101) comprsing steps of
setting up one or more new, own personal media channels (101) by the user of a first media device (102) at a first home (103),
selecting a second media device (104) of a second user at a second home (105) from a media channel guide user interface (110) of said first media device (102), both the first media device (102) and the second media device (104) to communicate with being identified by at least one unique identifier respectively;
linking the new, own personal media channel (101) to the selected first and second media devices (102, 104),
a representation of the new personal media channel (101) being displayed in a media channel guide user interface (110,) on the first television (102) and/or the second media device (104), when the new, own personal channel (101) is - pushed onto the media exchange network (108),
associating personal media of the user of the first media device (102) with said own, personal media channel (101),
setting up at least one third party channel (141) that is constructed by a third party provider (145) from third-party digital media either upon request by the user of first media device (143) and/or the user of the second media device (147) or based on a profile of the user making the request, the third party channel (141) being presented in a channel view in response to the request on the first media device (143) and/or second media device (147) by the media channel guide user interface (149, 144), the third party channel (141) being anonymously delivered to the first and/or second media device (143, 147), and
displaying said personal media on said new, own personal media channel (101) along with content of a media broadcast on at least one of said first media device (143) and said second media device (147), communicating at least a portion of said associated personal media over said new, own personal media channel (101) between said first media device (143) and said second media device (147).

6. A system (500) supporting consumption of media by a television display (507), the system comprising:
a communication network (413); and
a processor communicatively coupled to the communication network, wherein:
said processor delivers via said communication network, a user interface (502); said user interface (502) facilitating creation of a personal television channel (101); and
said processor participates to establish the personal television channel on the television display (507), comprising the steps of
setting up one or more new, own personal media channels (101) by the user of a first media device (102) at a first home (103),
selecting a second media device (104) of a second user at a second home (105) from a media channel guide user interface (110) of said first media device (102), both the first media device (102) and the second media device (104) to communicate with being identified by at least one unique identifier respectively;
linking the new, own personal media channel (101) to the selected first and second media devices (102, 104),
a representation of the new personal media channel (101) being displayed in a media channel guide user interface (110,) on the first television (102) and/or the second media device (104), when the new, own personal channel (101) is pushed onto the media exchange network (108),
associating personal media of the user of the first media device (102) with said own, personal media channel (101),
setting up at least one third party channel (141) that is constructed by a third party provider (145) from third-party digital media either upon request by the user of first media device (143) and/or the user of the second media device (147) or based on a profile of the user making the request, the third party channel (141) being presented in a channel view in response to the request on the first media device (143) and/or second media device (147) by the media channel guide user interface (149, 144), the third party channel (141) being anonymously delivered to the first and/or second media device (143, 147), and
displaying said personal media on said new, own personal media channel (101) along with content of a media broadcast on at least one of said first media device (143) and said second media device (147), communicating at least a portion of said associated personal media over said new, own personal media channel (101) between said first media device (143) and said second media device (147).

7. A system for supporting delivery of personal media to a television display (507) in a home from storage that is located outside of the home via a communication network (413), the system comprising:
a processor communicatively coupled to the communication network;
a personal television channel (101) viewable on the television display (507) established through participation by said processor; and
a visual interface (508) provided by said personal television channel (101) to support selective consumption of the personal media from the storage on the television display (507), comprising the steps of setting up one or more new, own personal media channels (101) by the user of a first media device (102) at a first home (103),
selecting a second media device (104) of a second user at a second home (105) from a media channel guide user interface (110) of said first media device (102), both the first media device (102) and the second media device (104) to communicate with being identified by at least one unique identifier respectively;
linking the new, own personal media channel (101) to the selected first and second media devices (102, 104),
a representation of the new personal media channel (101) being displayed in a media channel guide user interface (110,) on the first television (102) and/or the second media device (104), when the new, own personal channel (101) is pushed onto the media exchange network (108),
associating personal media of the user of the first media device (102) with said own, personal media channel (101),
setting up at least one third party channel (141) that is constructed by a third party provider (145) from third-party digital media either upon request by the user of first media device (143) and/or the user of the second media device (147) or based on a profile of the user making the request, the third party channel (141) being presented in a channel view in response to the request on the first media device (143) and/or second media device (147) by the media channel guide user interface (149, 144), the third party channel (141) being anonymously delivered to the first and/or second media device (143, 147), and
displaying said personal media on said new, own personal media channel (101) along with content of a media broadcast on at least one of said first media device (143) and said second media device (147), communicating at least a portion of said associated personal media over said new, own personal media channel (101) between said first media device (143) and said second media device (147).

## Patentansprüche

1. Verfahren zum Unterstützen der Kommunikation von Medien in einem Medienaustauschnetz (100), wobei das Verfahren umfasst:
Errichten eines oder mehrerer neuer, eigener persönlicher Medienkanäle (101) durch den Benutzer einer ersten Medienvorrichtung (102) in einem ersten Haus (103),
Auswählen einer zweiten Medienvorrichtung (104) eines zweiten Benutzers in einem zweiten Haus (105) von einer Medienkanal-Bedienungsanleitungs-Schnittstelle (110) der ersten Medienvorrichtung (102), wobei sowohl die erste Medienvorrichtung (102) als auch die zweite Medienvorrichtung (104), mit der zu kommunizieren ist, von wenigstens einem eindeutigen Identifizierer identifiziert werden; Verbinden des neuen, eigenen persönlichen Medienkanals (101) mit den ausgewählten ersten und zweiten Medienvorrichtungen (102, 104), wobei eine Darstellung des neuen persönlichen Medienkanals (101) an einer Medienkanal-Bedienungsanleitungs-Schnittstelle (110) auf der ersten Medienvorrichtung (102) und/oder der zweiten Medienvorrichtung (104) angezeigt wird, wenn der neue, eigene persönliche Kanal (101) auf das Medienaustauschnetz (108) geschoben wird,
Assoziieren persönlicher Medien des Benutzers der ersten Medienvorrichtung (102) mit dem eigenen, persönlichen Medienkanal (101),
Errichten wenigstens eines Kanals (141) eines Dritten, der von einem Provider (145) eines Dritten aus digitalen Medien eines Dritten entweder auf Anfrage des Benutzers der ersten Medienvorrichtung (143) und/oder des Benutzers der zweiten Medienvorrichtung (147) erstellt wird, oder auf einem Profil des anfragenden Benutzers basiert, wobei der Kanal (141) des Dritten in einer Kanalübersicht im Ansprechen auf die Anfrage auf der ersten Medienvorrichtung (143) und/oder der zweiten Medienvorrichtung (147) durch die Medienkanal-Bedienungsanleitungs-Schnittstelle (149, 144) präsentiert wird, wobei der Kanal (141) des Dritten anonym an die erste und/oder zweite Medienvorrichtung (143, 147) geliefert wird, und
Anzeigen der persönlichen Medien auf dem neuen, eigenen persönlichen Medienkanal (101) zusammen mit dem Inhalt eines Mediums, das auf wenigstens einer der ersten Medienvorrichtung (143) und der zweiten Medienvorrichtung (147) gesendet wird, Kommunizieren wenigstens eines Teils der assoziierten persönlichen Medien über den neuen, eigenen persönlichen Medienkanal (101) zwischen der ersten Medienvorrichtung (143) und der zweiten Medienvorrichtung (147).

2. Verfahren nach Anspruch 1, das des Weiteren umfasst, dass der wenigstens eine Identifizierer wenigstens eines ist einer Vorrichtungs-ID, einer Seriennummer, einer Medium Access Control (MAC) - Adresse und einer Internet Protocol (IP) - Adresse.

3. Verfahren nach einem der vorhergehenden Ansprüche, das des Weiteren umfasst, dass die erste und zweite Medienvorrichtung (143, 147) wenigstens eine ist eines Fernsehgeräts, eines PCs, eines Media Players, eines Digitalempfängers, einer Mediabox.

4. Maschinenlesbarer Speicher, auf dem ein Computerprogramm gespeichert ist, das wenigstens einen Codeabschnitt aufweist zum Unterstützen der Kommunikation von Medien, wobei der wenigstens eine Codeabschnitt von einer Maschine ausgeführt werden kann, damit veranlasst wird, dass die Maschine die folgenden Schritte durchführt:
Errichten eines oder mehrerer neuer, eigener persönlicher Medienkanäle (101) durch den Benutzer einer ersten Medienvorrichtung (102) in einem ersten Haus (103),
Auswählen einer zweiten Medienvorrichtung (104) eines zweiten Benutzers in einem zweiten Haus (105) von einer Medienkanal-Bedienungsanleitungs-Schnittstelle (110) der ersten Medienvorrichtung (102), wobei sowohl die erste Medienvorrichtung (102) als auch die zweite Medienvorrichtung (104), mit der zu kommunizieren ist, von wenigstens einem eindeutigen Identifizierer identifiziert werden; Verbinden des neuen, eigenen persönlichen Medienkanals (101) mit den ausgewählten ersten und zweiten Medienvorrichtungen (102, 104), wobei eine Darstellung des neuen persönlichen Medienkanals (101) an einer Medienkanal-Bedienungsanleitungs-Schnittstelle (110) auf dem ersten Fernsehgerät (102) und/oder der zweiten Medienvorrichtung (104) angezeigt wird, wenn der neue, eigene persönliche Kanal (101) auf das Medienaustauschnetz (108) geschoben wird,
Assoziieren persönlicher Medien des Benutzers der ersten Medienvorrichtung (102) mit dem eigenen, persönlichen Medienkanal (101),
Errichten wenigstens eines Kanals (141) eines Dritten, der von einem Provider (145) eines Dritten aus digitalen Medien eines Dritten entweder auf Anfrage des Benutzers der ersten Medienvorrichtung (143) und/oder des Benutzers der zweiten Medienvorrichtung (147) erstellt wird, oder auf einem Profil des anfragenden Benutzers basiert, wobei der Kanal (141) des Dritten in einer Kanalübersicht im Ansprechen auf die Anfrage auf der ersten Medienvorrichtung (143) und/oder der zweiten Medienvorrichtung (147) durch die Medienkanal-Bedienungsanleitungs-Schnittstelle (149, 144) präsentiert wird, wobei der Kanal (141) des Dritten anonym an die erste und/oder zweite Medienvorrichtung (143, 147) geliefert wird, und
Anzeigen der persönlichen Medien auf dem neuen, eigenen persönlichen Medienkanal (101) zusammen mit dem Inhalt eines Mediums, das auf wenigstens einer der ersten Medienvorrichtung (143) und der zweiten Medienvorrichtung (147) gesendet wird, Kommunizieren wenigstens eines Teils der assoziierten persönlichen Medien über den neuen, eigenen persönlichen Medienkanal (101) zwischen der ersten Medienvorrichtung (143) und der zweiten Medienvorrichtung (147).

5. System zum Unterstützen der Kommunikation von Medien, wobei das System aufweist:
wenigstens einen Prozessor zum Errichten eines persönlichen Medienkanals (101), der von einer ersten Medienvorrichtung (143) in einem ersten Haus und einer zweiten Medienvorrichtung (147) in einem zweiten Haus gezeigt werden soll; und
wobei das Assoziieren persönlicher Medien mit dem persönlichen Medienkanal durch den wenigstens einen Prozessor die folgenden Schritte umfasst:
Errichten eines oder mehrerer neuer, eigener persönlicher Medienkanäle (101) durch den Benutzer einer ersten Medienvorrichtung (102) in einem ersten Haus (103),
Auswählen einer zweiten Medienvorrichtung (104) eines zweiten Benutzers in einem zweiten Haus (105) von einer Medienkanal-Bedienungsanleitungs-Schnittstelle (110) der ersten Medienvorrichtung (102), wobei sowohl die erste Medienvorrichtung (102) als auch die zweite Medienvorrichtung (104), mit der zu kommunizieren ist, von wenigstens einem eindeutigen Identifizierer identifiziert werden; Verbinden des neuen, eigenen persönlichen Medienkanals (101) mit den ausgewählten ersten und zweiten Medienvorrichtungen (102, 104), wobei eine Darstellung des neuen persönlichen Medienkanals (101) an einer Medienkanal-Bedienungsanleitungs-Schnittstelle (110) auf dem ersten Fernsehgerät (102) und/oder der zweiten Medienvorrichtung (104) angezeigt wird, wenn der neue, eigene persönliche Kanal (101) auf das Medienaustauschnetz (108) geschoben wird,
Assoziieren persönlicher Medien des Benutzers der ersten Medienvorrichtung (102) mit dem eigenen, persönlichen Medienkanal (101),
Errichten wenigstens eines Kanals (141) eines Dritten, der von einem Provider (145) eines Dritten aus digitalen Medien eines Dritten entweder auf Anfrage des Benutzers der ersten Medienvorrichtung (143) und/oder des Benutzers der zweiten Medienvorrichtung (147) erstellt wird, oder auf einem Profil des anfragenden Benutzers basiert, wobei der Kanal (141) des Dritten in einer Kanalübersicht im Ansprechen auf die Anfrage auf der ersten Medienvorrichtung (143) und/oder der zweiten Medienvorrichtung (147) durch die Medienkanal-Bedienungsanleitungs-Schnittstelle (149, 144) präsentiert wird, wobei der Kanal (141) des Dritten anonym an die erste und/oder zweite Medienvorrichtung (143, 147) geliefert wird, und
Anzeigen der persönlichen Medien auf dem neuen, eigenen persönlichen Medienkanal (101) zusammen mit dem Inhalt eines Mediums, das auf wenigstens einer der ersten Medienvorrichtung (143) und der zweiten Medienvorrichtung (147) gesendet wird, Kommunizieren wenigstens eines Teils der assoziierten persönlichen Medien über den neuen, eigenen persönlichen Medienkanal (101) zwischen der ersten Medienvorrichtung (143) und der zweiten Medienvorrichtung (147).

6. System (500), das den Konsum von Medien mittels eines Fernsehbildschirms (507) unterstützt, wobei das System aufweist:
ein Kommunikationsnetzwerk (413); und
einen Prozessor, der kommunikativ mit dem Kommunikationsnetzwerk gekoppelt ist, wobei:
der Prozessor über das Kommunikationsnetzwerk eine Benutzerschnittstelle (502) kommuniziert, wobei die Benutzerschnittstelle (502) das Erstellen eines persönlichen Fernsehkanals (101) erleichtert; und
wobei der Prozessor an der Erstellung des persönlichen Fernsehkanals auf dem Fernsehbildschirm (507) teilhat, mittels folgender Schritte:
Errichten eines oder mehrerer neuer, eigener persönlicher Medienkanäle (101) durch den Benutzer einer ersten Medienvorrichtung (102) in einem ersten Haus (103);
Auswählen einer zweiten Medienvorrichtung (104) eines zweiten Benutzers in einem zweiten Haus (105) von einer Medienkanal-Bedienungsanleitungs-Schnittstelle (110) der ersten Medienvorrichtung (102), wobei sowohl die erste Medienvorrichtung (102) als auch die zweite Medienvorrichtung (104), mit der zu kommunizieren ist, von wenigstens einem eindeutigen Identifizierer identifiziert werden; Verbinden des neuen, eigenen persönlichen Medienkanals (101) mit den ausgewählten ersten und zweiten Medienvorrichtungen (102, 104), wobei eine Darstellung des neuen persönlichen Medienkanals (101) an einer Medienkanal-Bedienungsanleitungs-Schnittstelle (110) auf dem ersten Fernsehgerät (102) und/oder der zweiten Medienvorrichtung (104) angezeigt wird, wenn der neue, eigene persönliche Kanal (101) auf das Medienaustauschnetz (108) geschoben wird,
Assoziieren persönlicher Medien des Benutzers der ersten Medienvorrichtung (102) mit dem eigenen, persönlichen Medienkanal (101),
Errichten wenigstens eines Kanals (141) eines Dritten, der von einem Provider (145) eines Dritten aus digitalen Medien eines Dritten entweder auf Anfrage des Benutzers der ersten Medienvorrichtung (143) und/oder des Benutzers der zweiten Medienvorrichtung (147) erstellt wird, oder auf einem Profil des anfragenden Benutzers basiert, wobei der Kanal (141) des Dritten in einer Kanalübersicht im Ansprechen auf die Anfrage auf der ersten Medienvorrichtung (143) und/oder der zweiten Medienvorrichtung (147) durch die Medienkanal-Bedienungsanleitungs-Schnittstelle (149, 144) präsentiert wird, wobei der Kanal (141) des Dritten anonym an die erste und/oder zweite Medienvorrichtung (143, 147) geliefert wird, und
Anzeigen der persönlichen Medien auf dem neuen, eigenen persönlichen Medienkanal (101) zusammen mit dem Inhalt eines Mediums, das auf wenigstens einer der ersten Medienvorrichtung (143) und der zweiten Medienvorrichtung (147) gesendet wird, Kommunizieren wenigstens eines Teils der assoziierten persönlichen Medien über den neuen, eigenen persönlichen Medienkanal (101) zwischen der ersten Medienvorrichtung (143) und der zweiten Medienvorrichtung (147).

7. System zum Unterstützen des Lieferns persönlicher Medien an einen Fernsehbildschirm (507) in einem Haus von einem Speicher, der sich außerhalb des Hauses befindet, über ein Kommunikationsnetzwerk (413), wobei das System aufweist:
einen Prozessor, der kommunikativ mit dem Kommunikationsnetzwerk gekoppelt ist;
einen persönlichen Fernsehkanal (101), der auf dem Fernsehbildschirm (507) geschaut werden kann, erstellt unter Beteiligung des Prozessors; und
eine visuelle Schnittstelle (508), die von dem persönlichen Fernsehkanal (101) bereitgestellt wird, um den selektiven Konsum der persönlichen Medien von dem Speicher auf dem Fernsehbildschirm (507) zu unterstützen, mittels folgender Schritte:
Errichten eines oder mehrerer neuer, eigener persönlicher Medienkanäle (101) durch den Benutzer einer ersten Medienvorrichtung (102) in einem ersten Haus (103),
Auswählen einer zweiten Medienvorrichtung (104) eines zweiten Benutzers in einem zweiten Haus (105) von einer Medienkanal-Bedienungsanleitungs-Schnittstelle (110) der ersten Medienvorrichtung (102), wobei sowohl die erste Medienvorrichtung (102) als auch die zweite Medienvorrichtung (104), mit der zu kommunizieren ist, von wenigstens einem eindeutigen Identifizierer identifiziert werden; Verbinden des neuen, eigenen persönlichen Medienkanals (101) mit den ausgewählten ersten und zweiten Medienvorrichtungen (102, 104), wobei eine Darstellung des neuen persönlichen Medienkanals (101) an einer Medienkanal-Bedienungsanleitungs-Schnittstelle (110) auf dem ersten Fernsehgerät (102) und/oder der zweiten Medienvorrichtung (104) angezeigt wird, wenn der neue, eigene persönliche Kanal (101) auf das Medienaustauschnetz (108) geschoben wird,
Assoziieren persönlicher Medien des Benutzers der ersten Medienvorrichtung (102) mit dem eigenen, persönlichen Medienkanal (101),
Errichten wenigstens eines Kanals (141) eines Dritten, der von einem Provider (145) eines Dritten aus digitalen Medien eines Dritten entweder auf Anfrage des Benutzers der ersten Medienvorrichtung (143) und/oder des Benutzers der zweiten Medienvorrichtung (147) erstellt wird, oder auf einem Profil des anfragenden Benutzers basiert, wobei der Kanal (141) des Dritten in einer Kanalübersicht im Ansprechen auf die Anfrage auf der ersten Medienvorrichtung (143) und/oder der zweiten Medienvorrichtung (147) durch die Medienkanal-Bedienungsanleitungs-Schnittstelle (149, 144) präsentiert wird, wobei der Kanal (141) des Dritten anonym an die erste und/oder zweite Medienvorrichtung (143, 147) geliefert wird, und
Anzeigen der persönlichen Medien auf dem neuen, eigenen persönlichen Medienkanal (101) zusammen mit dem Inhalt eines Mediums, das auf wenigstens einer der ersten Medienvorrichtung (143) und der zweiten Medienvorrichtung (147) gesendet wird, Kommunizieren wenigstens eines Teils der assoziierten persönlichen Medien über den neuen, eigenen persönlichen Medienkanal (101) zwischen der ersten Medienvorrichtung (143) und der zweiten Medienvorrichtung (147).

## Revendications

1. Procédé de prise en charge de communications de média dans un réseau d'échange de média (100), **caractérisé en ce que** le procédé comprend les étapes suivantes :
établissement d'un ou plusieurs nouveaux canaux de média personnel propre (101) par l'utilisateur d'un premier dispositif de média (102) à une première maison (103),
sélection d'un deuxième dispositif de média (104) d'un deuxième utilisateur à une deuxième maison (105) à partir d'une interface utilisateur de guide d'un canal de média (110) dudit premier dispositif de média (102), le premier dispositif de média (102) et le deuxième dispositif de média (104) avec lesquels communiquer étant identifiés respectivement par au moins un identifiant unique ;
liaison du nouveau canal de média personnel propre (101) aux premier et deuxième dispositif de média sélectionné (102, 104),
représentation du nouveau canal de média personnel propre (101) étant affichée dans une interface utilisateur de guide d'un canal de média (110) sur le premier dispositif de média (102) et/ou le deuxième dispositif de média (104), lorsque le nouveau canal de média personnel propre (101) est poussé sur le réseau d'échange de média (108),
association du média personnel de l'utilisateur du premier dispositif de média (102) audit canal de média personnel propre (101),
établissement d'au moins un canal tiers (141) qui est construit par un fournisseur tiers (145) à partir de média numérique tiers soit à la demande de l'utilisateur du premier dispositif de média (143) et/ou de l'utilisateur du deuxième dispositif de média (147) soit sur la base d'un profil de l'utilisateur formulant la demande, le canal tiers (141) étant présenté dans une vue de canal en réponse à la demande du premier dispositif de média (143) et/ou du deuxième dispositif de média (147) par l'interface utilisateur de guide d'un canal de média (149, 144), le canal tiers (141) étant fourni de manière anonyme aux premier et/ou deuxième dispositifs de média (143, 147), et
affichage dudit média personnel sur ledit nouveau canal de média personnel propre (101) avec le contenu d'une diffusion de média sur au moins l'un dudit premier dispositif de média (143) et dudit deuxième dispositif de média (147), en communiquant au moins une portion dudit média personnel associé sur ledit nouveau canal de média personnel propre (101) entre ledit premier dispositif de média (143) et ledit deuxième dispositif de média (147).

2. Procédé selon la revendication 1, **caractérisé en ce que** ledit au moins un identifiant appartient au groupe comprenant : un identifiant de dispositif, un numéro de série, une adresse de contrôle d'accès au support (MAC) et une adresse de protocole Internet (IP).

3. Procédé selon l'une quelconque des revendications 1 et 2, **caractérisé en ce que** lesdits premier et deuxième dispositifs de média (143, 147) appartiennent au groupe comprenant : un téléviseur, un PC, un lecteur de support, un terminal, un boîtier de média.

4. Moyen de stockage lisible par ordinateur comprenant un programme d'ordinateur ayant au moins une section de code pour prendre en charge la communication de média, ladite au moins une section de code étant exécutable par un ordinateur pour amener l'ordinateur à effectuer les étapes suivantes:
établissement d'un ou plusieurs nouveaux canaux de média personnel propre (101) par l'utilisateur d'un premier dispositif de média (102) à une première maison (103),
sélection d'un deuxième dispositif de média (104) d'un deuxième utilisateur à une deuxième maison (105) à partir d'une interface utilisateur de guide d'un canal de média (110) dudit premier dispositif de média (102), le premier dispositif de média (102) et le deuxième dispositif de média (104) avec lesquels communiquer étant identifiés respectivement par au moins un identifiant unique ;
liaison du nouveau canal de média personnel propre (101) aux premier et deuxième dispositif de média sélectionné (102, 104),
représentation du nouveau canal de média personnel propre (101) étant affichée dans une interface utilisateur de guide d'un canal de média (110) sur le premier dispositif de média (102) et/ou le deuxième dispositif de média (104), lorsque le nouveau canal de média personnel propre (101) est poussé sur le réseau d'échange de média (108),
association du média personnel de l'utilisateur du premier dispositif de média (102) audit canal de média personnel propre (101),
établissement d'au moins un canal tiers (141) qui est construit par un fournisseur tiers (145) à partir de média numérique tiers soit à la demande de l'utilisateur du premier dispositif de média (143) et/ou de l'utilisateur du deuxième dispositif de média (147) soit sur la base d'un profil de l'utilisateur formulant la demande, le canal tiers (141) étant présenté dans une vue de canal en réponse à la demande du premier dispositif de média (143) et/ou du deuxième dispositif de média (147) par l'interface utilisateur de guide d'un canal de média (149, 144), le canal tiers (141) étant fourni de manière anonyme aux premier et/ou deuxième dispositifs de média (143, 147), et
affichage dudit média personnel sur ledit nouveau canal de média personnel propre (101) avec le contenu d'une diffusion de média sur au moins l'un dudit premier dispositif de média (143) et dudit deuxième dispositif de média (147), en communiquant au moins une portion dudit média personnel associé sur ledit nouveau canal de média personnel propre (101) entre ledit premier dispositif de média (143) et ledit deuxième dispositif de média (147).

5. Système de prise en charge de communications de média, **caractérisé en ce qu'**il comprend :
au moins un processeur pour établir un canal de média personnel (101) à montrer par un premier dispositif de média (143) à une première maison et un deuxième dispositif de média (147) à une deuxième maison ; et
ledit au moins un processeur associe un média personnel audit canal de média personnel (101) et effectue les étapes suivantes :
établissement d'un ou plusieurs nouveaux canaux de média personnel propre (101) par l'utilisateur d'un premier dispositif de média (102) à une première maison (103),
sélection d'un deuxième dispositif de média (104) d'un deuxième utilisateur à une deuxième maison (105) à partir d'une interface utilisateur de guide d'un canal de média (110) dudit premier dispositif de média (102), le premier dispositif de média (102) et le deuxième dispositif de média (104) avec lesquels communiquer étant identifiés respectivement par au moins un identifiant unique ;
liaison du nouveau canal de média personnel propre (101) aux premier et deuxième dispositif de média sélectionné (102, 104),
représentation du nouveau canal de média personnel propre (101) étant affichée dans une interface utilisateur de guide d'un canal de média (110) sur le premier dispositif de média (102) et/ou le deuxième dispositif de média (104), lorsque le nouveau canal de média personnel propre (101) est poussé sur le réseau d'échange de média (108),
association du média personnel de l'utilisateur du premier dispositif de média (102) audit canal de média personnel propre (101),
établissement d'au moins un canal tiers (141) qui est construit par un fournisseur tiers (145) à partir de média numérique tiers soit à la demande de l'utilisateur du premier dispositif de média (143) et/ou de l'utilisateur du deuxième dispositif de média (147) soit sur la base d'un profil de l'utilisateur formulant la demande, le canal tiers (141) étant présenté dans une vue de canal en réponse à la demande du premier dispositif de média (143) et/ou du deuxième dispositif de média (147) par l'interface utilisateur de guide d'un canal de média (149, 144), le canal tiers (141) étant fourni de manière anonyme aux premier et/ou deuxième dispositifs de média (143, 147), et
affichage dudit média personnel sur ledit nouveau canal de média personnel propre (101) avec le contenu d'une diffusion de média sur au moins l'un dudit premier dispositif de média (143) et dudit deuxième dispositif de média (147), en communiquant au moins une portion dudit média personnel associé sur ledit nouveau canal de média personnel propre (101) entre ledit premier dispositif de média (143) et ledit deuxième dispositif de média (147).

6. Système (500) de prise en charge de consommation de média par un écran de télévision (507), le système comprenant :
un réseau de communication (413) ; et
un processeur couplé de manière communicative au réseau de communication, dans lequel :
ledit processeur fournit par l'intermédiaire dudit réseau de communication, une interface utilisateur (502) ; ladite interface utilisateur (502) facilitant la création d'un canal de télévision personnel (101) ; et
ledit processeur participe à l'établissement du canal de télévision personnel sur l'écran de télévision (507), comprenant les étapes suivantes
établissement d'un ou plusieurs nouveaux canaux de média personnel propre (101) par l'utilisateur d'un premier dispositif de média (102) à une première maison (103),
sélection d'un deuxième dispositif de média (104) d'un deuxième utilisateur à une deuxième maison (105) à partir d'une interface utilisateur de guide d'un canal de média (110) dudit premier dispositif de média (102), le premier dispositif de média (102) et le deuxième dispositif de média (104) avec lesquels communiquer étant identifiés respectivement par au moins un identifiant unique ;
liaison du nouveau canal de média personnel propre (101) aux premier et deuxième dispositif de média sélectionné (102, 104),
représentation du nouveau canal de média personnel propre (101) étant affichée dans une interface utilisateur de guide d'un canal de média (110) sur le premier dispositif de média (102) et/ou le deuxième dispositif de média (104), lorsque le nouveau canal de média personnel propre (101) est poussé sur le réseau d'échange de média (108),
association du média personnel de l'utilisateur du premier dispositif de média (102) audit canal de média personnel propre (101),
établissement d'au moins un canal tiers (141) qui est construit par un fournisseur tiers (145) à partir de média numérique tiers soit à la demande de l'utilisateur du premier dispositif de média (143) et/ou de l'utilisateur du deuxième dispositif de média (147) soit sur la base d'un profil de l'utilisateur formulant la demande, le canal tiers (141) étant présenté dans une vue de canal en réponse à la demande du premier dispositif de média (143) et/ou du deuxième dispositif de média (147) par l'interface utilisateur de guide d'un canal de média (149, 144), le canal tiers (141) étant fourni de manière anonyme aux premier et/ou deuxième dispositifs de média (143, 147), et
affichage dudit média personnel sur ledit nouveau canal de média personnel propre (101) avec le contenu d'une diffusion de média sur au moins l'un dudit premier dispositif de média (143) et dudit deuxième dispositif de média (147), en communiquant au moins une portion dudit média personnel associé sur ledit nouveau canal de média personnel propre (101) entre ledit premier dispositif de média (143) et ledit deuxième dispositif de média (147).

7. Système de prise en charge de la fourniture d'un média personnel à un écran de télévision (507) dans une maison à partir d'un stockage qui est situé à l'extérieur de la maison par l'intermédiaire d'un réseau de communication (413), le système comprenant :
un processeur couplé de manière communicative au réseau de communication ;
un canal de télévision personnel (101) visualisable sur l'écran de télévision (507) établi à travers la participation dudit processeur ; et
une interface visuelle (508) fournie par ledit canal de télévision personnel (101) pour prendre en charge la consommation sélective du média personnel à partir du stockage sur l'affichage de téléviseur (507), comprenant les étapes suivantes :
établissement d'un ou plusieurs nouveaux canaux de média personnel propre (101) par l'utilisateur d'un premier dispositif de média (102) à une première maison (103),
sélection d'un deuxième dispositif de média (104) d'un deuxième utilisateur à une deuxième maison (105) à partir d'une interface utilisateur de guide d'un canal de média (110) dudit premier dispositif de média (102), le premier dispositif de média (102) et le deuxième dispositif de média (104) avec lesquels communiquer étant identifiés respectivement par au moins un identifiant unique ;
liaison du nouveau canal de média personnel propre (101) aux premier et deuxième dispositif de média sélectionné (102, 104),
représentation du nouveau canal de média personnel propre (101) étant affichée dans une interface utilisateur de guide d'un canal de média (110) sur le premier dispositif de média (102) et/ou le deuxième dispositif de média (104), lorsque le nouveau canal de média personnel propre (101) est poussé sur le réseau d'échange de média (108),
association du média personnel de l'utilisateur du premier dispositif de média (102) audit canal de média personnel propre (101),
établissement d'au moins un canal tiers (141) qui est construit par un fournisseur tiers (145) à partir de média numérique tiers soit à la demande de l'utilisateur du premier dispositif de média (143) et/ou de l'utilisateur du deuxième dispositif de média (147) soit sur la base d'un profil de l'utilisateur formulant la demande, le canal tiers (141) étant présenté dans une vue de canal en réponse à la demande du premier dispositif de média (143) et/ou du deuxième dispositif de média (147) par l'interface utilisateur de guide d'un canal de média (149, 144), le canal tiers (141) étant fourni de manière anonyme aux premier et/ou deuxième dispositifs de média (143, 147), et
affichage dudit média personnel sur ledit nouveau canal de média personnel propre (101) avec le contenu d'une diffusion de média sur au moins l'un dudit premier dispositif de média (143) et dudit deuxième dispositif de média (147), en communiquant au moins une portion dudit média personnel associé sur ledit nouveau canal de média personnel propre (101) entre ledit premier dispositif de média (143) et ledit deuxième dispositif de média (147).
